# EUROPEAN PATENT APPLICATION

(11) **EP 3 257 814 A1**
(43) Date of publication of application: **20.12.2017**
(21) Application number: 16175094.8
(22) Date of filing: 17.06.2016
(51) Int. Cl.: C01C 1/04, B01D 53/04

(54) **PROCESS FOR AMMONIA PRODUCTION**

(71) Applicant: Casale SA, 6900 Lugano (CH)
(72) Inventor: OSTUNI, Raffaele, 6900 Lugano (CH); FERRINI, Cristina, 6932 Breganzona (CH); GOICOCHEA, Javier, 6962 Viganello (CH)
(74) Representative: Zardi, Marco

(57) **Abstract**

A process for the synthesis of ammonia from a make-up gas containing hydrogen and nitrogen, comprising at least two steps for the synthesis of ammonia, wherein: said reactive steps are performed in series and each of said reactive steps provides an ammonia-containing product gas; the second and any subsequent reactive step receives, as a feed stream, at least a portion of the product gas of the previous reactive step; an intermediate adsorptive step of ammonia is performed between consecutive reactive steps, so that the product gas of each step is depleted of ammonia prior to the subsequent reactive step of said series.

## Description

### Field of the invention

The invention relates to a process for the ammonia production by the catalytic conversion of a make-up synthesis gas.

### Prior art

The industrial production of ammonia involves the catalytic conversion of a synthesis gas ("make-up gas") comprising hydrogen and nitrogen in a synthesis loop, according to the following reaction:

3 H₂ + N₂ ⇄ 2 NH₃ (ΔH⁰₂₉₈ = -92.4 kJ/mol)

High equilibrium ammonia concentration could be achieved at high pressure and low temperature.

However, for technical and economical limitations, the industrial ammonia production is carried out at temperature higher than 350 °C which ensures that the catalyst is active and at pressure lower than 200 bar, thus entailing a low equilibrium ammonia concentration.

The unfavourable equilibrium of the reaction limits the ammonia concentration achievable under practical conditions to about 20%mol or less, which corresponds to a conversion per pass lower than 30%.

The conversion per pass is defined as the ratio between the moles converted in a single pass through a single reactor or a series of reactors and the moles fed to said reactor or said series of reactors. Said moles are to be understood as the moles of the limiting reagent (i.e. H₂ or N₂).

According to the above definition, a conversion per pass lower than 30% implies that more than 2/3 of the reactants fed to the reactor(s) are not directly converted to ammonia and, therefore, must be recycled to the reactor(s) in order to minimize the feed consumption.

A high conversion per pass of reactants into ammonia has several advantages and brings about important savings on the main components of the ammonia synthesis loop, i.e. make-up and recycle compressor, reactor(s), heat recovery section, cooler and chillers, separator.

In particular, a high conversion per pass reduces the amount of unconverted reactants that must be recycled back to the reactor(s); a large recycle stream is undesirable as it leads to high costs for recompression and large size of all synthesis loop equipment. Moreover, a high conversion per pass is beneficial to reduce the energy consumption of the make-up and recycle compressors, the energy consumption to cool and condense the ammonia product from the reactor(s), the size of equipment items and pipes of the synthesis section, the cost of the syngas and refrigeration compressors. High conversion per pass also enables a better heat recovery.

A prior art process carried out in a reactor containing a single adiabatic bed under typical industrial conditions achieves a low conversion per pass and a low outlet ammonia concentration of e.g. 11%mol.

More effective reactor configurations have been proposed in order to increase the conversion per pass of reactants into ammonia, such as multiple adiabatic catalyst beds with intercooling or pseudo-isothermal catalyst beds.

A typical multi-bed reactor of the prior art comprises three catalyst beds with intermediate coolers, which allows achieving an optimized outlet ammonia concentration of about 18.5%mol under typical industrial conditions and with typical catalyst volumes installed, which corresponds to a conversion per pass of about 30%.

Other reactor configurations have been proposed with a greater number of adiabatic catalyst beds (i.e. more than three), while keeping the same total catalyst volume. Although said configurations entail an increase of the conversion per pass, such increase is marginal and does not compensate for the higher costs required by the greater number of beds. Even the use of larger catalyst volumes does not provide for a significant increase of the conversion per pass which is able to compensate for the higher costs of the larger equipment required. For the above reasons, three-bed reactors represent an optimal compromise in the prior art.

In order to further increase the conversion per pass, methods have also been developed in the prior art which make use of adsorption and regeneration cycles to selectively separate ammonia from an ammonia synthesis gas. However, none have been successfully applied in industrial ammonia production.

For example, US 5,711,926 describes a process for the synthesis of ammonia wherein the reactor effluent is depleted in ammonia by an adsorptive step before being recycled back to the reactor. Despite some advantages, e.g. absence of a product cooling train in the synthesis loop and reduced ammonia compression power requirements, the conversion per pass is not significantly increased.

A process whereby ammonia is removed by adsorption from the converter's feed gas is disclosed in US4537760. However, also in this case the conversion per pass is subjected to an only marginal increase.

Other processes, e.g. those described in US3531246 or US20060039847, are based on concurrent reaction and adsorptive separation of ammonia, wherein mixed beds of adsorbent and ammonia synthesis catalyst are used to carry out the ammonia synthesis reaction and the in situ ammonia product removal by selective adsorption. Such processes entail higher conversion per pass and higher reaction rates, but still have several drawbacks.

In fact, such higher conversion per pass entails extremely high temperatures, due to exothermic ammonia synthesis reaction. For example a 50% conversion per pass entails a temperature rise of 500°C above the initial temperature of reaction, which is e.g. about 400°C, thus involving temperatures which are significantly higher than the already severe operating conditions of the ammonia synthesis.

At such high temperatures the ammonia synthesis catalyst will deteriorate. Moreover, corrosive phenomena such as those from nitrogen and hydrogen attacks are more severe at higher temperatures. Hence, pressure vessels may require costly materials (e.g. stainless steel or Inconel) to withstand these conditions and complicated mechanical designs may be required to protect the pressure vessels from high temperatures (e.g. flushing or cartridge insulations).

In addition, the aforementioned mixed beds containing both adsorbent and catalyst must withstand both the high temperature achieved by the reaction and the temperature/pressure cycles for the adsorbent regeneration, thus originating significant mechanical stresses. Moreover, the concurrent presence of the two materials leads to an increased size of the pressure vessels.

Concurrent adsorption and reaction forces the use of high adsorption temperatures (i.e. at least 400°C to ensure that the catalyst is active), which reduce the adsorption capacity of the adsorbent and further increase the required size of the vessels.

Furthermore, in order to carry out a continuous process multiple vessels are required, which are moreover large and expensive, as stated above.

Finally, the heat of reaction cannot be entirely recovered because of the excessive temperature and a quenching with a cold feed gas may be necessary.

### Summary of the invention

The aim of the invention is to solve the above shortcomings of the prior art. In particular, an aim of the invention is to provide an ammonia synthesis process with a high conversion per pass of the reactants (i.e. H₂, N₂) to ammonia (NH₃), which is simple, reliable and economical.

This aim is reached with a process for the synthesis of ammonia from a make-up gas containing hydrogen and nitrogen according to claim 1. This process comprises at least two reactive steps for the synthesis of ammonia, wherein:
said reactive steps are performed in series and each of said reactive steps provides an ammonia-containing product gas;
the second and any subsequent reactive step receives, as a feed stream, at least part of the product gas of the previous reactive step;
an intermediate adsorptive step of ammonia is performed between consecutive reactive steps, so that the product gas of each reactive step is depleted of ammonia prior to the subsequent reactive step of said series.

Accordingly, the process of the invention comprises N reactive steps performed in series and (N-1) adsorptive steps performed between two consecutive reactive steps, wherein N is an integer number equal to or greater than 2.

Preferably, the product gas of a reactive step is entirely routed to the following adsorptive step. Preferably, the ammonia-depleted product gas of an adsorptive step is entirely routed to the subsequent reactive step.

According to an embodiment of the invention, a first portion of the ammonia-depleted product gas provided by at least one adsorptive step is routed back to the preceding reactive step, while a second portion of said product gas is sent to the subsequent reactive step. An advantage of this embodiment is that both the feed stream of the reactive step following said at least one adsorptive step and the feed stream of the reactive step preceding the same have an increased reactivity due to a lower content in ammonia.

According to a preferred embodiment, N is 2, meaning that the process comprises two reactive steps with one intermediate adsorptive step. According to said embodiment, at least part of the product gas of the first reactive step is routed as feed stream to the following adsorptive step and at least part of the ammonia-depleted product gas of said adsorptive step is routed as feed stream to the second reactive step. Even more preferably, the product gas of the first reactive step is entirely sent to the adsorptive step and the ammonia-depleted product gas of said adsorptive step is entirely directed to the second reactive step.

Each of said N reactive steps may be carried out in one or more catalyst beds. In the latter case, the catalyst beds may be placed in the same reactor vessel or in different reactor vessels, meaning that each of said N reactive may be carried out in one or more reactor vessels.

Each adsorptive step at least partially removes the ammonia from the product gas leaving the preceding reactive step and provides an ammonia-depleted product gas to the subsequent reactive step, thus favouring the kinetics of the reaction. Accordingly, an advantage of the invention is that a smaller volume of catalyst is required for each reactive step carried out after an adsorptive step, if compared with catalyst volumes required when no adsorptive step is performed.

The applicant has also surprisingly found that each of said reactive steps may be advantageously carried out in a catalyst volume equal to or substantially equal to the catalyst volume of the preceding reactive step, which is contrary to the teaching of the prior art. Even more advantageously, each of said reactive steps may be carried out in a catalyst volume smaller than the catalyst volume of the preceding reactive step, which is beneficial especially in terms of cost and size of the catalytic beds.

Besides to a lower inlet ammonia concentration to each reactive step downstream an adsorptive step, the above effect can also be attributed to a smaller syngas flow rate at the inlet of each of said reactive steps.

Preferably the reactive steps are carried out in fixed adiabatic catalytic beds. Alternatively, the reactive steps may be carried out in pseudo-isothermal fixed catalytic beds.

According to preferred embodiments, each of said (N-1) adsorptive steps is carried out in at least one adsorption unit, each unit comprising at least two vessels and each vessel containing a solid adsorbent suitable to selectively adsorb ammonia.

Said vessels alternately carry out at least the following main steps: (a) an adsorption step, comprising contacting the ammonia-containing product gas provided by a corresponding reactive step with the solid adsorbent and adsorption of ammonia from said product gas, providing said ammonia-depleted product gas and an ammonia-loaded adsorbent; (b) an adsorbent regeneration step, wherein ammonia is desorbed, providing an ammonia-containing output stream.

Accordingly, the above steps are scheduled such that while one vessel performs the adsorption step (a) the other vessel performs the adsorbent regeneration step (b).

In greater detail, when the ammonia adsorption capacity of the adsorbent in a vessel is reduced to a low value, a product gas is routed to another vessel, in order to allow regeneration of the adsorption capacity of the adsorbent in the previous vessel and reconditioning of the previous vessel to make it ready for another adsorption step (a).

Advantageously, said steps of adsorption (a) and adsorbent regeneration (b) are suitably scheduled to ensure that the adsorption of ammonia from an ammonia-containing product gas from a reactive step is carried out continuously.

The adsorbent regeneration (b) may include depressurization and / or heating of the adsorbent. Accordingly, a pressure swing adsorption step (PSA) is carried out in the former case and a temperature swing adsorption step (TSA) is carried out in the latter case. According to some embodiments, regeneration may include both pressure and temperature swing (PTSA).

In the following, the terms of "adsorptive step" and of "adsorptive cycle" are equally used.

The adsorptive cycle(s) may also include additional steps besides the main steps of adsorption (a) and regeneration (b), for example pressure equalization, purge, sweep, rinse.

According to a particular embodiment, more than one vessel undergoes the adsorption step (a) in parallel. This depends on the adsorptive cycle schedule of the adsorption unit.

According to an embodiment, each adsorptive step is performed in a dedicated adsorption unit, meaning that the (N-1) adsorptive steps are carried out in (N-1) independent adsorption units.

According to a further embodiment with N ≥ 3, the adsorptive steps (i.e. in the number of two or more) are carried out in a single adsorption unit comprising a number of vessels alternately carrying out the adsorption (a) and regeneration (b) steps. Said steps are suitably scheduled to ensure that each of said adsorptive steps is carried out continuously, meaning that at any time there are at least (N-1) vessels receiving the product gas of a respective reactive step.

Preferably, the ammonia-containing output stream produced by the adsorbent regeneration step (b) is suitably treated, for example compressed, condensed and purified, in order to recover an ammonia product stream which can be stored or further used. Moreover, heat can be conveniently recovered from said output stream. Said ammonia-containing output stream also contains some incondensable gases, which are preferably separated and recovered for use as fuel or recycled as synthesis gas in the process in order to minimize feedstock consumption.

According a particular embodiment, said ammonia-containing output stream is recycled to a further process without being condensed, for example to a process for the synthesis of nitric acid. This implies that ammonia is sent to said further process in vapour phase and is used as a gaseous feedstock.

Advantageously, each adsorptive step is operationally and physically separated from the reactive steps, which means that the adsorbent is not mixed with the catalyst and the adsorbent vessels are separated from the catalyst beds.

Preferably, each adsorptive step is carried out at a temperature lower than the peak temperature of the reactive steps and higher than the dew point of the effluent stream leaving the preceding reactive step. Preferably, each adsorptive step is carried out at a temperature comprised in the range of 200 to 400 °C. This feature is advantageous because it allows reducing costs, energy consumption and loss of heat recovery that would be entailed by chilling and condensation of the ammonia to separate it from the product gas of a previous reactive step, and reheating of the gas to the temperature of a subsequent reactive step.

In some embodiments, the product gas provided by at least one reactive step is at least partially subjected to the corresponding adsorptive step without any heat exchange. This implies that no heat exchanger is present between a reactor vessel and an adsorption unit.

In other preferred embodiments, said product gas is cooled before being at least partially subjected to the adsorptive step. Said cooling enables carrying out the adsorptive step at a lower temperature, which enhances the capacity of the adsorbent and permits the use of smaller adsorbent vessels. The use of smaller vessels is of paramount importance due to the elevated costs required for their realization.

Accordingly, the heat recovered by cooling down the product gas of a reactive step may be advantageously used to pre-heat the feed stream of one or more reactive steps. Alternatively, the heat recovered from said product gas may be used for steam generation.

Similarly, the effluent of an adsorptive step may be at least partially subjected to the subsequent reactive step without any intermediate heat exchange, or may be heated or cooled to adjust the temperature before being at least partially fed to said subsequent reactive step.

The adsorbent used for the adsorptive step(s) has a capacity suitable to selectively adsorb ammonia from an ammonia-rich product gas. For example, said adsorbent is chosen among the materials disclosed in US 5,711,926. Preferably, the ammonia adsorbent suitable for the purpose of invention has higher ammonia capacity at lower temperature and lower capacity at higher temperature. Hence, the adsorptive step may be advantageously carried out at temperature lower than 400 °C, more preferably lower than 300 °C.

An adsorptive step preferably captures at least 30% of the ammonia contained in the product gas it receives, more preferably at least 60%, even more preferably at least 90%. An adsorptive step preferably captures less than 5% of the hydrogen and nitrogen contained in the product, more preferably less than 1%.

A plant for carrying out said process and a method of revamping of an ammonia synthesis loop according to the annexed claims are also object of the present invention.

The method of revamping according to the invention is characterized by installing an adsorption unit between two synthesis units arranged in series. Said synthesis units may contain one or more catalyst beds each and may be located within the same reactor vessel or in different reactor vessels.

According to a particular embodiment, an ammonia synthesis loop comprising a reactor vessel containing three catalyst beds, wherein the third bed is bigger than the second bed and the second bed is bigger than the first bed, is revamped by: replacing the third catalyst bed with a third and a fourth bed of smaller size so that the total catalyst volume required by said newly installed third and fourth catalyst beds is less than or equal to or substantially equal to the volume of the original third bed;
using the first and second beds to operate a first reactive step and using the newly installed third and fourth beds to operate a second reactive step;
installing an adsorption unit so as to operate an adsorptive step between said first and second reactive steps.

Accordingly, the above method of revamping is able to ensure a better conversion per pass thanks to the installation of an adsorption unit providing for intermediate ammonia product removal, which also permits to reduce the catalyst volume required for the second reactive step. Consequently, it takes great advantage of the better thermodynamic performance of a four bed configuration without exceeding the size of the reactor vessel.

According to another embodiment, an ammonia synthesis loop comprising a first reactor vessel and a second reactor vessel in series, each containing one or more catalyst beds, is revamped by installing an adsorption unit between said two reactor vessels.

Preferably, said second reactor vessel is revamped by increasing the number of catalyst beds contained in the vessel itself so that the total catalyst volume is less than or equal to or substantially equal to the catalyst volume originally present in said second vessel. For example, a catalyst bed contained in the second vessel is replaced by two or more catalyst beds of smaller size. This is permitted by the fact that, according to the invention, the catalyst volume required for carrying out a reactive step after an adsorptive step is smaller than the catalyst volume required in the prior art, where no adsorptive step is performed.

The present invention has the combined advantage of increasing the conversion per pass and reducing the catalyst volume and / or the operating pressure. The following reasons support the dramatic improvement obtained.

The process of the invention allows each reactive step to be operated with a low inlet ammonia concentration thanks to the presence of intermediate adsorptive step(s). As a consequence, each catalyst bed is characterized by a low inlet ammonia concentration, which provides for a series of advantages. First of all, each catalyst bed hits the equilibrium curve after reaching a much higher conversion than a catalyst bed with high inlet ammonia concentration. Second, each bed requires much less catalyst volume due to a large driving force for the reaction. Finally, each bed is able to achieve a high conversion using a small catalyst volume even at low pressures, due to the shape of equilibrium curves.

The process of the invention is also advantageous over the prior art processes with concurrent reactive and adsorptive steps, because it allows achieving similar conversion performances while satisfying the following conditions: limitation of the reaction exotherm so that conventional reactor technology and conventional materials can be used; heat recovery after one or more reactive steps, with the significant advantage of running the adsorptive and the reactive steps closer to their optimal operating conditions; independence of the adsorptive and reactive steps as regards the operating temperature; operation of the adsorption vessels at temperatures of 200-400 °C and preferably 200-300 °C, similar to the design conditions of conventional ammonia reactor vessels; use of a smaller amount of adsorbent thanks to the lower temperatures of the adsorptive step; less mechanical stress due to pressure cycles at lower temperature; better adsorption capacity at lower temperature, which reduces the size and/or number of the vessels; regeneration of the adsorbent by temperature swing using the enthalpy of the reaction effluent to increase the adsorbent working capacity.

The advantages of the invention will be elucidated with the help of the following description of preferred and non-limiting embodiments.

### Brief description of the drawings

Fig. 1 shows a block scheme of a process for the synthesis of ammonia according to the prior art.
Fig. 2 shows a diagram of ammonia molar fraction (yNH₃) versus temperature (T) of the prior art process according to Fig. 1.
Fig. 3 shows a block scheme of a process for the synthesis of ammonia according to a first embodiment of the invention.
Fig. 4 shows a diagram of ammonia molar fraction (yNH₃) versus temperature (T) according to a first mode of implementing the process of Fig. 3.
Fig. 4a shows a diagram T-yNH₃ according to another mode of implementing the process of Fig. 3.
Fig. 5 shows the performance of the process according to Fig. 3 over a T- yNH₃ diagram of a corresponding process of the prior art without intermediate ammonia adsorption.
Fig. 6 shows a block scheme of a process for the synthesis of ammonia according to a second embodiment of the invention.
Fig. 7 shows the performance of the process according to Fig. 6 over a T- yNH₃ diagram of a corresponding process of the prior art without intermediate ammonia adsorption.
Fig. 8 shows a block scheme of a process for the synthesis of ammonia according to a third embodiment of the invention.
Fig. 9 shows a block scheme of a process for the synthesis of ammonia according to a forth embodiment of the invention.

### Detailed description

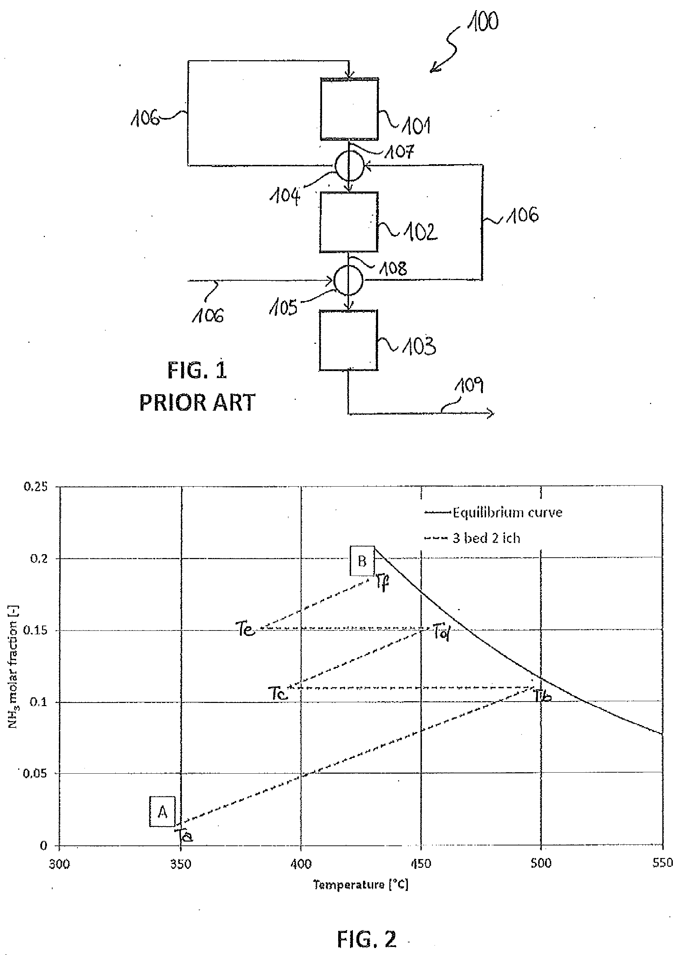

A prior art multi-bed reactor 100 is shown in Fig. 1. Said reactor 100 comprises three adiabatic catalytic beds 101, 102, 103 arranged in series, a first inter-bed heat exchanger 104 and a second inter-bed heat exchanger 105.

The operation of the reactor 100 is illustrated below.

A fresh make-up gas 106 passes through the second heat exchanger 105, wherein it is preheated by the effluent of the second bed 102, and subsequently through the first heat exchanger 104, wherein it is preheated by the effluent of the first bed 101. The so pre-heated make-up gas 106 enters the first bed 102, where it partially reacts to provide a first ammonia-containing stream 107. Said stream 107 is cooled inside the first heat exchanger 104 and the cooled effluent enters the second bed 102, where it further reacts to provide a second ammonia-containing stream 108. Similarly, said stream 108 is cooled in the second heat exchanger 105 before entering the third bed 103, which provides an ammonia product 109. Said product 109 leaves the reactor 101.

The performance of said multi-bed reactor 100 is illustrated in the plot "temperature (T) vs ammonia molar fraction (yNH₃)" of Fig. 2, in comparison with an equilibrium curve. The equilibrium curve indicates the equilibrium ammonia concentration at any temperature for the following conditions: P = 135 bar, H/N ratio = 3, inlet molar concentration of inerts (i.e. methane and/or argon and/or helium) = 7%mol. The equilibrium concentration is the maximum concentration achievable at any temperature.

The performance of the adiabatic beds 101, 102, 103 are represented as straight lines between the inlet and outlet points, A and B respectively.

The distance between the outlet point B and the equilibrium curve is determined by the volume of catalyst. In this example the catalyst volume amounts to 0.05 m³ per daily ton of ammonia, which is conventional for the above conditions of pressure and inlet reactor composition. A greater volume of catalyst would entail a higher conversion until the equilibrium curve is reached, and any further volume of catalyst beyond that value would be ineffective.

According to Fig. 2, the fresh make-up gas 106 enters the first adiabatic bed 101 (at point A) at a temperature Ta, where it reacts adiabatically to generate the first ammonia-containing stream 107 at a temperature Tb. Said stream 107 is cooled from Tb to Tc in the first inter-bed heat exchanger 104 and is fed to the second bed 102 where it reacts adiabatically to provide the second ammonia-containing stream 108. Within the second bed 102, the reaction temperature raises from Tc to Td. The second stream 108 leaving the second bed 102 is subsequently cooled in the second inter-bed heat exchanger 105 from Td to Te and fed to the third bed 103, where it further reacts adiabatically to provide a third gaseous stream 109 (at point B) with a temperature increase from Te to Tf.

In view of the above plot, it can be appreciated that an ammonia process performed in a reactor containing three beds in series allows achieving an outlet ammonia concentration of 18.5%mol, which corresponds to a conversion per pass of 31.4%, as shown in table 1 below.

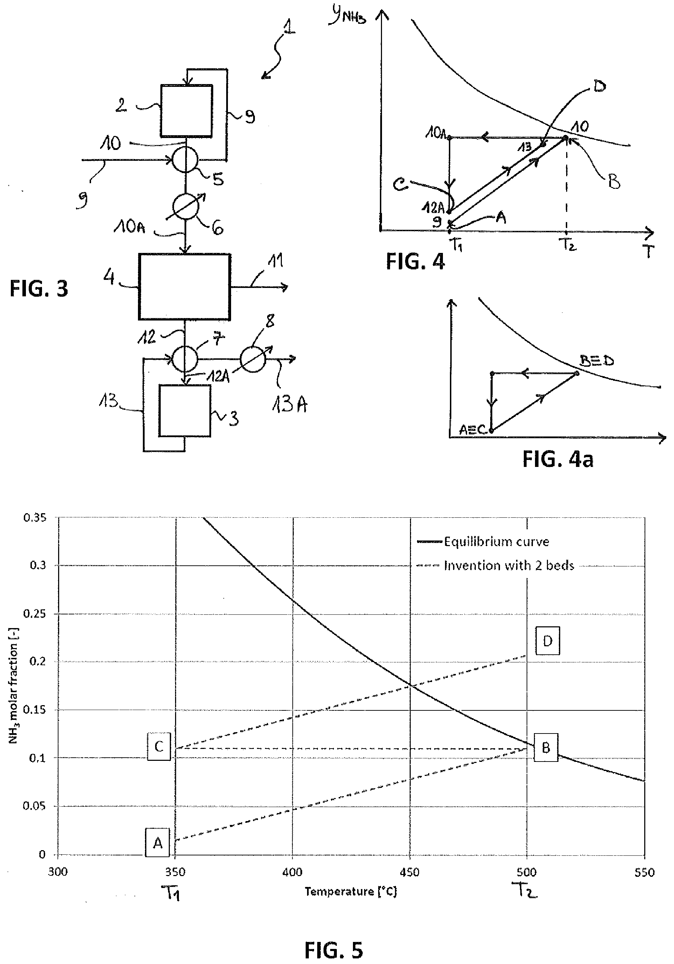

Fig. 3 is a block scheme of an ammonia synthesis process which is carried out in a two-bed ammonia reactor 1. Said reactor 1 comprises two adiabatic catalyst beds 2 and 3 with an intermediate adsorption unit 4. Said two catalyst beds carry out a first and a second reactive step of conversion of a make-up gas into ammonia, respectively. The embodiment of the figure also includes three inter-bed heat exchangers 5, 6 and 7 and a bottom heat exchanger 8. The process shown in Fig. 3 is as follows.

A fresh make-up gas 9 is pre-heated in a first heat exchanger 5 by an effluent 10 of the first adiabatic bed 2. The so pre-heated gas enters said first adiabatic bed 2, wherein it reacts to provide a first ammonia-containing stream 10. Said stream 10 is cooled in the first heat exchanger 5 by means of the fresh make-up gas 9 and is further cooled in a second heat exchanger 6, providing a stream 10A. The cooled stream 10A is subsequently fed to the adsorption unit 4, wherein about 90% of the ammonia contained in the stream 10 leaving the first adiabatic bed 2 and less than 1% of the H₂ and N₂ contained therein are removed.

Said adsorption unit 4 contains at least two vessels (not shown), which alternately carry out an adsorption step and an adsorbent regeneration step, thus providing an ammonia-containing stream 11 and an ammonia-depleted stream 12. Said two steps are scheduled such that while one vessel performs the adsorption step the other vessel performs the adsorbent regeneration step, hence such that the adsorption of ammonia from the ammonia-containing stream 10A is carried out continuously.

Said ammonia-depleted stream 12 is subsequently pre-heated in a third heat-exchanger 7 by means of an effluent 13 of the second adiabatic bed 3, providing a stream 12A. Then, the pre-heated stream 12A enters the second adiabatic bed 3, where it reacts to provide an ammonia product gas 13. Said product gas 13 is cooled in said third heat exchanger 7 and further cooled in the bottom heat exchanger 8, providing a stream 13A which is exported from the reactor 1.

The ammonia-containing stream 11 and the product gas 13A contain the total amount of ammonia obtained through this process.

Preferably, the ammonia-containing stream 11 is suitably treated, for example compressed, condensed and purified, in order to recover an ammonia product stream which can be stored or further used. Alternatively, said stream 11 can be directly recycled to a process, where ammonia is used in gaseous phase, e.g. nitric acid production.

The heat recovered by cooling down the first ammonia-containing stream 10 in the second heat exchanger 6 and by cooling down the ammonia product gas 13 in the bottom heat exchanger 8 can be advantageously used to pre-heat the stream 9 and/or the stream 12 or for generating steam.

Fig. 4 is a representation of the performance of the ammonia synthesis process according to Fig. 3.

The fresh make-up gas 9 enters the first adiabatic bed 2 (at point A) at a temperature T₁ of 350 °C where it reacts evolving heat and generating the first ammonia-containing stream 10 (at point B) at a temperature T₂ of 500 °C. Said first stream 10 is cooled e.g. from T₂ to T₁ in the first and second heat exchangers 5, 6 to provide the stream 10A. Said stream 10A is supplied to the adsorption unit 4, which removes about 90% of the ammonia contained in the stream 10A (at point C). The ammonia-depleted stream 12 is subsequently pre-heated in said third heat-exchanger 7 to provide stream 12A, which is fed to the second bed 3 where it reacts adiabatically to provide the ammonia product gas 13 (at point D) with a temperature increase e.g. from T₁ to T₂.

In a specific embodiment, point C coincides with point A and point D coincides with point B. Accordingly, the process is represented substantially as a triangle in a T-yNH₃ plot (Fig. 4a).

For comparative purposes, the T-yNH₃ plot of Fig. 5 shows as point D the ammonia concentration calculated on the basis of both the ammonia-containing stream 11 and the ammonia product gas 13A of the process of Fig. 3. In other words, point D represents the molar fraction of an output stream that would result from mixing said stream 11 and product gas 13A.

Fig. 5 also shows the equilibrium curve of a reference prior art process comprising two adiabatic reactive steps and an intermediate cooling (without the intermediate adsorptive step and separation of stream 11). This reference prior art process is illustrated by the straight dashed lines of Fig. 5.

As evident from the figure, point D falls beyond the equilibrium curve of the prior art process. This means that the ammonia concentration obtained with the process of Fig. 3 is beyond the ammonia concentration achievable with the prior art process, thanks to the fact that stream 11 is separated from the adsorption unit 4 and only stream 12A is subjected to the second reactive step in the second catalyst bed 3.

In view of the representation of Fig. 5, it can be appreciated that said process obtains an outlet ammonia molar fraction of 20.5%, which corresponds to a conversion per pass of 34.8%, as shown in table 1 below.

Depending on the temperature of the make-up gas 9, one the following heat exchange configurations is adopted.

If the temperature of the make-up gas 9 is lower than a given value, i.e. 200 °C in the example, the heat recovery in the second heat exchanger 6 upstream the adsorption unit 4 can be avoided, and the third heat exchanger 7 upstream the second bed 3 can be used to control the pre-heating temperature of the second bed itself.

On the other, if the temperature is higher than the above value, heat is advantageously recovered in the second heat exchanger 6 upstream the adsorption unit 4, and the third heat exchanger 7 upstream the second bed 3 can be avoided.

If the temperature is controlled to a precise value, i.e. 200°C for the example, e.g. by means of an external exchanger, both the heat recovery in the second heat exchanger 6 upstream the adsorption unit 4 and the third heat exchanger 7 upstream the second bed 3 can be avoided, thereby simplifying the heat exchange network.

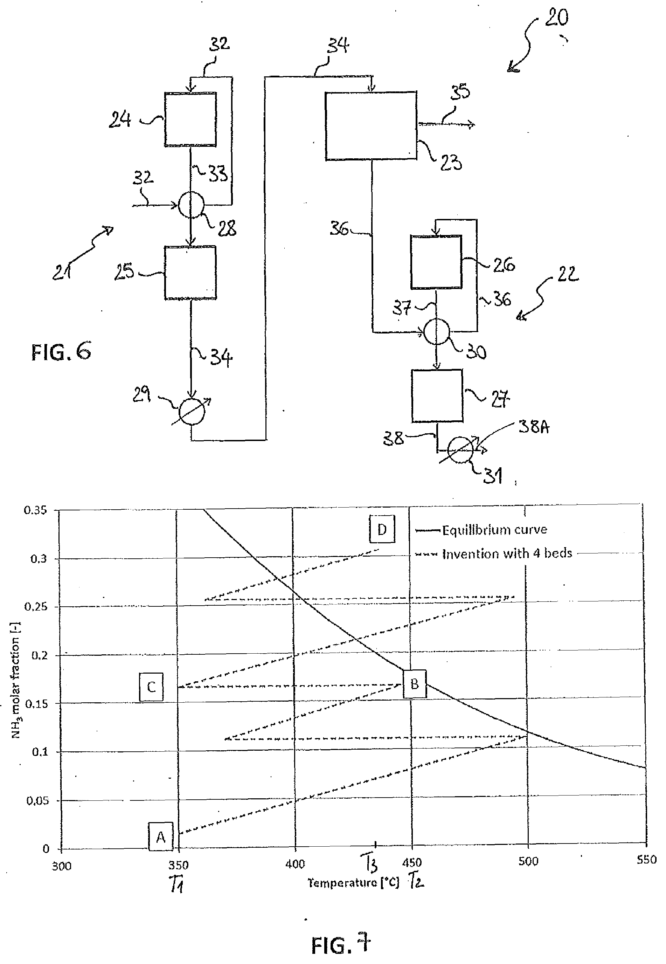

Fig. 6 is a block scheme of an ammonia synthesis process which is carried out in a four-bed ammonia reactor 20. Said reactor 20 comprises two pairs of consecutive catalyst beds 21 and 22 with an intermediate ammonia adsorption unit 23. A first pair 21 comprises two adiabatic catalyst beds 24, 25 performing a first reactive step, and a second pair 22 comprises two adiabatic catalyst beds 26, 27 performing a second reactive step.

The catalyst beds 24, 25 forming the first pair 21 of catalyst beds can be comprised within a single reactor vessel or within separate reactor vessels. Similarly, the catalyst beds 26, 27 forming the first pair 22 of catalyst beds can be comprised within a single reactor vessel or within separate reactor vessels.

The embodiment of the figure also includes three inter-bed heat exchangers 28, 29 and 30 and a bottom heat exchanger 31.

For the sake of brevity, the catalyst beds 24 to 27 will be referred to as first to fourth catalyst beds and the inter-bed heat exchangers 28 to 30 will be referred to as first to third heat exchanger.

The process shown in Fig. 6 is as follows. A fresh make-up gas 32 is pre-heated in the first heat exchanger 28 by an effluent 33 of the first adiabatic bed 24 and fed into said bed 24, wherein it reacts to provide a partial reacted stream 33. Said stream 33 is cooled in the first heat exchanger 28 and subsequently fed into the second adiabatic bed 25, wherein it reacts to provide an ammonia-containing stream 34 which is cooled in the second heat exchanger 29. The resulting cooled stream 34 is introduced into the adsorption unit 23, which provides an ammonia-containing stream 35 and an ammonia-depleted stream 36. The ammonia ammonia-depleted stream 36 is subsequently pre-heated in the third heat-exchanger 30 by means of an effluent 37 of the third adiabatic bed 26 and fed into the bed 26 itself, where it reacts to provide an ammonia-containing stream 37. Said stream 37 is cooled in said third heat exchanger 30 and subsequently fed into the fourth adiabatic bed 27, wherein it reacts to provide an ammonia product gas 38 which is cooled in the bottom heat exchanger 31 to provide stream 38A and exported.

Similarly to Fig. 5, the T-yNH₃ plot of Fig. 7 shows as point D the ammonia concentration calculated on the basis of both the ammonia-containing stream 35 separated from the adsorption unit 23 and the ammonia product gas 38A separated from the second pair 22 of catalyst beds, according to the process of Fig. 6.

Fig. 7 also shows the equilibrium curve of a reference prior art process comprising four adiabatic reactive steps with intermediate cooling (without the intermediate adsorptive step and separation of stream 35). This reference prior art process is illustrated by the straight dashed lines of Fig. 7.

Also in this case, point D falls beyond the equilibrium curve of the prior art process, which means that the ammonia concentration obtained with the process of Fig. 6 is significantly greater than the concentration achievable with the prior art process.

From the representation of Fig. 7, it can be appreciated that the process according to Fig. 6 obtains an outlet ammonia molar fraction of 30.7%, which corresponds to a conversion per pass of 48.8%, as shown in table 1 below.

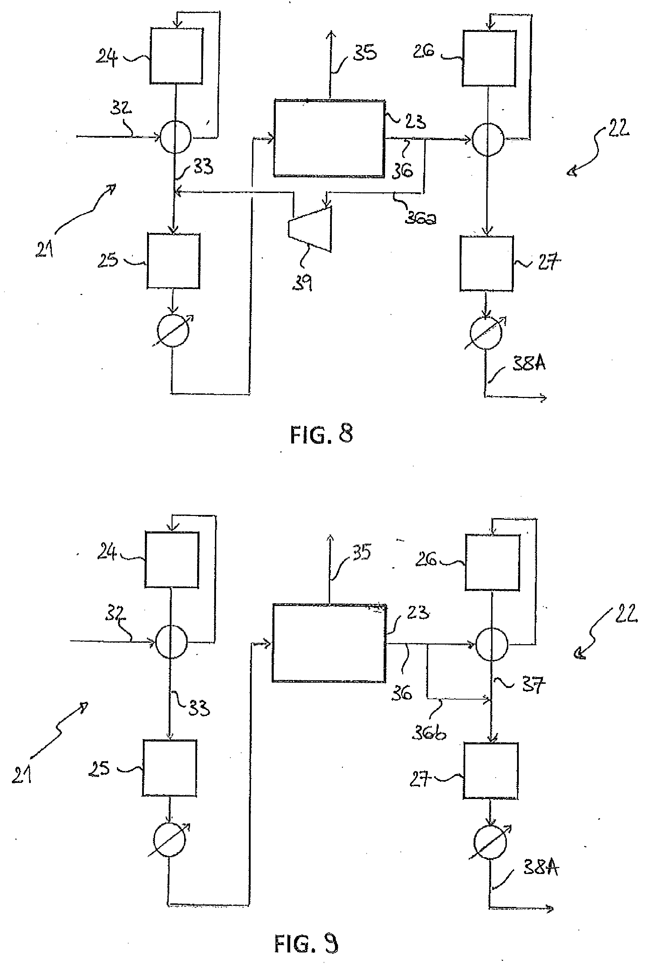

Fig. 8 shows a block scheme of the ammonia synthesis process shown in Fig. 5, wherein a portion 36a of the ammonia-depleted stream 36 leaving the adsorption unit 23 is joint, via a compressor 39, with the partial reacted stream 33 leaving the first adiabatic bed 24 and subsequently fed to the second adiabatic bed 25. The advantage is that the stream 33 is more reactive due to a lower content in ammonia.

Fig. 9 shows a block scheme of the ammonia synthesis process shown in Fig. 6, wherein a portion 36b of the ammonia-depleted stream leaving the adsorption unit 23 is joint with the stream 37 leaving the first adiabatic bed 26 of the first pair 22 of beds. Similarly to the process of Fig. 7, the stream 37 is more reactive due to a lower content in ammonia.

### Experimental data

Table 1 below summarizes the performance of the first embodiment of the invention according to Fig. 3 and the second embodiment according to Fig. 5, compared with the embodiment of the prior art according to Fig. 1.

The evaluation is at the same pressure of 135 bar, a H/N ratio of 3, an inlet molar concentration of inerts of 7%mol for all cases. For the embodiments of Figs. 3 and 5, an ammonia concentration of 1.5%mol at the inlet of the second reactive step and an ammonia separation of 90% within the adsorption unit have been considered.

The first embodiment of the invention (Fig. 3) requires 40% of the catalyst volume of the 3-beds configuration of the prior art (Fig. 1) and achieves much higher conversion per pass of 34.8%. The equivalent outlet ammonia concentration achieved by the first embodiment of the invention is 20.5 %mol.

The second embodiment of the invention (Fig. 5) reaches a conversion per pass of 48.8%, which corresponds to an outlet ammonia concentration of 30.7%mol. Said values are obtained by using the same total catalyst volume of the 3-beds configuration of the prior art (Fig. 1), but it can be appreciated that the conversion per pass achieved by this embodiment is dramatically higher than that of the prior art.

A conversion per pass of 31.4% (Fig. 1) means that more than 2/3 of the reactants are not converted in a single reactor pass and must therefore be recycled to the reactor together with fresh gas. On the other hand, a conversion per pass of 48.8% (Fig. 5) means that only half of the reactants are not converted in a single reactor pass.

A further embodiment of the invention, wherein the ammonia synthesis process is carried out in a reactor comprising three adiabatic beds in series with two intermediate adsorption units, allows achieving a conversion pass of 48.5%, which is similar to that obtained with the second embodiment of the invention (Fig. 5), while requiring 60% of the catalyst volume of the 3-beds configuration of the prior art (Fig. 1), which is much lower that the catalyst volume required for the embodiment of Fig. 5.

**Table 1**

| Embodiment | Fig. 1 | Fig. 3 | Fig. 5 |
|---|---|---|---|
| Number of adiabatic catalytic beds | 3 | 1 + 1 | 2+2 |
| Total catalyst volume, relative to 3-beds configuration of Fig. 1 | 100% | 40% | 100% |
| Outlet ammonia molar fraction | 18.5% | 20.5% | 30.7% |
| Ammonia conversion per pass | 31.4% | 34.8% | 48.8% |
| Conversion relative to 3-beds configuration of Fig. 1 | - | 111% | 155% |

Another remarkable benefit of the invention is the possibility to reach an extremely high conversion per pass even at much lower operating pressures.

Table 2 below compares the conversion achieved by the second embodiment of the invention (Fig. 5) at 100 bar with that obtained by the embodiment of the prior art (Fig. 1) at 135 bar. Despite the drastically lower pressure and the same catalyst volume, the embodiment of the invention achieves a conversion per pass of 42%, which corresponds to an outlet ammonia concentration of 25.7%mol.

**Table 2**

| Embodiment | Fig. 1 | Fig. 5 |
|---|---|---|
| Number of adiabatic catalytic beds | 3 | 2+2 |
| Total catalyst volume, relative to 3-beds configuration of Fig. 1 | 100% | 100% |
| Reactor pressure [bar] | 135 | 100 |
| Outlet ammonia mole fraction | 18.5% | 25.7% |
| Ammonia conversion per pass | 31.4% | 42.0% |
| Conversion relative to 3-beds configuration of Fig. 1 | - | 134% |

## Claims

1. A process for the synthesis of ammonia from a make-up gas (9, 32) containing hydrogen and nitrogen, comprising at least two steps for the synthesis of ammonia, wherein:
said reactive steps are performed in series and each of said reactive steps provides an ammonia-containing product gas (10, 13, 34, 38);
the second and any subsequent reactive step receives, as a feed stream, at least a portion of the product gas (12A, 36) of the previous reactive step;
an intermediate adsorptive step of ammonia is performed between consecutive reactive steps, so that the product gas of each reactive step is depleted of ammonia prior to the subsequent reactive step of said series.

2. A process according to claim 1, wherein said reactive steps are carried out in one or more catalyst beds (2, 3, 24, 25, 26, 27), said catalyst beds being arranged in a single reactor vessel or in different reactor vessels.

3. A process according to claim 2, each of said reactive steps being carried out in a catalyst volume substantially equal to or greater than the catalyst volume of the subsequent reactive step.

4. A process according to any one of the previous claims, said reactive steps being carried out adiabatically or pseudo isothermally.

5. A process according to any one of the previous claims, wherein each adsorptive step is carried out in at least one adsorption unit (4, 23), each unit comprising at least two vessels in series, each vessel containing a solid adsorbent suitable to selectively adsorb ammonia and alternately carrying out the following steps:
(a) an adsorption step, comprising contacting the ammonia-containing product gas (10, 34) provided by a corresponding reactive step with the solid adsorbent and adsorption of ammonia from said product gas, providing an ammonia-loaded adsorbent; and
(b) an adsorbent regeneration step, wherein ammonia is desorbed, providing said ammonia-depleted product gas (12, 36) and an ammonia containing-output stream (11, 35).

6. A process according to claim 5, wherein the adsorbent regeneration step (b) is carried out by depressurization and / or heating of the adsorbent.

7. A process according to any one of the previous claims, wherein each adsorptive step is performed in a dedicated adsorption unit.

8. A process according to any one of claims 5 or 6, said adsorptive steps being at least two and being performed in a single adsorption unit, wherein the adsorption step (a) and the adsorbent regeneration step (b) are scheduled to ensure that each of said adsorptive step is carried out continuously.

9. A process according to any one of claims 5 to 8, wherein said ammonia containing-output stream (11, 35) from the regeneration step is recycled to a further process in gaseous phase, for example to a process for the synthesis of nitric acid.

10. A process according to any one of the previous claims, wherein each adsorptive step is carried out at a temperature lower than the reactive steps and higher than the dew point of the ammonia-containing product gas leaving the previous reactive step, preferably in the range of 200 to 400 °C.

11. A process according to any one of the previous claims, wherein said ammonia-containing product gas (10, 34) provided by at least one reactive step is cooled before being at least partially subjected to a subsequent adsorptive step.

12. A process according to claim 11, wherein said ammonia-containing product gas (10, 34) is used to pre-heat the feed stream of a reactive step or to generate steam.

13. A process according to any one of the previous claims, wherein said ammonia-depleted product gas (12, 36) provided by at least one adsorptive step is heated or cooled before being at least partially directed to the subsequent reactive step.

14. A process according to any one of the previous claims, wherein each adsorptive step adsorbs at least 30% of the ammonia contained in the ammonia-containing product gas provided by the previous reactive step, preferably more than 60%, more preferably more than 90%.

15. A plant for the synthesis of ammonia from a make-up gas containing hydrogen and nitrogen, comprising:
at least two units (21, 22) for the synthesis of ammonia, said units being arranged in series and each of said units containing one or more reactor vessels, wherein each reactor vessel contains one or more catalyst beds (24, 25, 26, 27);
at least one adsorption unit (4, 23) located between consecutive synthesis units, each of said adsorption units comprising at least two vessels arranged in series and each vessel containing a solid adsorbent suitable to selectively adsorb ammonia.

16. A method of revamping of an ammonia synthesis loop comprising at least a first synthesis unit and a second synthesis unit, arranged in series and containing one or more catalyst beds each,
the method being **characterized by** installing an adsorption unit between said first and second synthesis unit.

17. A method of revamping according to claim 16, wherein the total catalyst volume of said first synthesis unit is substantially equal to or greater than the second synthesis unit

18. A method of revamping according to claim 16 or 17, **characterized by** replacing at least one catalyst bed of the second synthesis unit with at least two catalyst beds of smaller size so that the total catalyst volume of said newly installed beds is substantially equal to or smaller than the catalyst volume of the original catalyst bed of the second synthesis unit.
